Europäisches Patentamt

European Patent Office

Office européen des brevets

(11) Veröffentlichungsnummer : **0 088 985**
B2

(12) **NEUE EUROPÄISCHE PATENTSCHRIFT**

(45) Veröffentlichungstag der neuen Patentschrift :
02.11.89

(51) Int. Cl.⁴ : **G 02 B 21/36**, G 02 F 1/13

(21) Anmeldenummer : **83102245.4**

(22) Anmeldetag : **08.03.83**

(54) Flüssigkristallanzeige für Mikroskope.

(30) Priorität : **12.03.82 DE 3208917**

(43) Veröffentlichungstag der Anmeldung :
**21.09.83 Patentblatt 83/38**

(45) Bekanntmachung des Hinweises auf die Patenterteilung : **06.08.86 Patentblatt 86/32**

(45) Bekanntmachung des Hinweises auf die Entscheidung über den Einspruch : **02.11.89 Patentblatt 89/44**

(84) Benannte Vertragsstaaten :
**AT CH DE GB LI**

(56) Entgegenhaltungen :
**CH--A-- 526 096**
**DE--A-- 2 635 786**
**DE--A-- 2 710 735**
**DE--A-- 2 946 078**
**DE--B-- 2 751 573**
**GB--A-- 1 432 558**
**US--A-- 3 961 348**
**US--A-- 4 057 318**
**US--A-- 4 274 092**
**Leitz-Prospekt "Erhitzungsmikroskope", Liste 73-3b, Oktober 1958**

(73) Patentinhaber : **Firma Carl Zeiss**
**D-7920 Heidenheim (Brenz) (DE)**

(72) Erfinder : **Schwab, Klaus**
**Arnold-Böcklin-Strasse 117**
**D-7920 Heidenheim (Brenz) (DE)**

EP 0 088 985 B2

## Beschreibung

Die Erfindung betrifft ein Photomikroskop mit einer Einrichtung zur Überlagerung des Bildes im Okulartubus mit Zusatzinformationen, die ein elektrisch ansteuerbare Segmente enthaltendes Anzeigefeld aufweist, das in die Zwischenbildebene im Okulartubus abgebildet wird.

In der Mikroskopie werden seit langem sogenannte Okularstrichplatten verwendet, die, in einer Zwischenbildebene angeordnet, dem Betrachter zusätzliche Informationen oder Hilfen bei der Beurteilung des mikroskopischen Bildes geben. Dabei handelt es sich beispielsweise um Massstäbe, bei Photomikroskopen um Formatbegrenzungen und Schärfeindikatoren etc. Es is auch z.B. aus der US-A-4 057 318 bekannt derartige Strichplatten in eine Zwischenbildebene hineinzuprojizieren.

Die bisher dafür verwendeten Strichplatten bestehen aus Glas, in das die benötigten Zeichen bzw. Symbole eingeätzt bzw. aufgedampft sind. Diese Strichplatten sind auswechselbar am Mikroskop befestigt, da sich die benötigten Zeichen in der Regel nicht auf einer einzigen Platte darstellen lassen bzw. eine Überfrachtung der Platte mit verschiedenartigen Symbolen stört. Das Wechseln der Platten ist aber für den Benutzer lästig ; ausserdem bedeutet die auswechselbare Befestigung einen erhöhten fertigungstechnischen Aufwand bei der Herstellung des Mikroskops, da gewisse Anforderungen an die Zentriergenauigkeit, Lichtdichtigkeit etc. gestellt werden. Schliesslich muss die Zwischenbildebene, in der die Platten angeordnet werden, von aussen leicht zugänglich sein.

Bei photographischen Kameras ist es bekannt, Zusatzinformationen auf den Film dadurch aufzunehmen, dass man eine mit Leuchtdioden arbeitende Anzeigevorrichtung in die Filmebene abbildet. Die nötige Eingabetastatur zur Auswahl der benötigten Zeichen oder Symbole befindet sich dabei an der Rückwand der Kamera ; die Filmebene selbst ist aus naheliegenden Gründen visuell nicht zugänglich.

Derartige Einrichtungen sind in der Mikrophotographie nur bedingt einsetzbar, da die Eingabetastatur sich in der Regel nicht im Sicht-bzw. Arbeitsbereich des Beobachters befindet. Ausserdem wird lediglich die Filmebene mit Zusatzinformationen überlagert, eine direkte Überlagerung des vom Betrachter mit Hilfe der Okulare wahrgenommenen Zwischenbildes ist nicht möglich.

Aus der US-A-4 274 092 ist es bekannt ein LED Display in eines der beiden Okulare eines Stereomikroskopes einzuspiegeln. Das LED Display dient lediglich zur Bereitstellung von Informationen für den Betrachter. Ein Einspiegeln von Daten auf z.B. die Filmebene einer an das Mikroskop angeschlossenen Kamera ist nicht möglich. Nachteilig ist ausserdem die unsymmetrische Einspiegelung in nur einen der beiden Okularstutzen.

In der US-A-3 961 348 ist ein Photomikroskop beschrieben, in dessen Okularbildebene ein LCD-Anzeigefeld eingesetzt ist. Auch dieses Anzeigefeld bietet nur dem Betrachter Informationen und ermöglicht nicht das Einspiegeln von Daten in die Filmebene. Da das Anzeigefeld aus mehreren, teils polarisierenden Schichten zusammengesetzt ist, führt eine Anordnung direkt in der Okularbildebene bei der visuellen Betrachtung ausserdem zu einer Verschlechterung der Bildqualität.

Aus der CH-A-526 096 ist ein Photomikroskop mit einer Leuchtziffer-Anzeigevorrichtung bekannt, die sowohl in das Zwischenbild im Okulartubus als auch in die Filmebene abgebildet wird. Das Photomikroskop besitzt außerdem einen ansetzbaren Photometerbaustein mit einer beleuchteten Meßblende, die ebenfalls sowohl in den Okulartubus als auch in den zum photographischen Film führenden Strahlengang eingeblendet werden kann.

Es ist die Aufgabe der vorliegenden Erfindung eine Einrichtung zur Überlagerung von mikroskopischen Bildern mit verschiedenartigen Zusatzinformationen zu schaffen, die ohne ein mechanisches Wechseln der Vorlagen arbeitet, wobei ein Teil der Informationen während des Mikroskopierens für den Beobachter sichtbar ist, während ein zweiter Teil der Informationen zur Abbildung in eine der visuellen Beobachtung nicht ohne weiteres zugängliche Bildebene gelangt.

Diese Aufgabe wird durch die im Kennzeichen des Hauptanspruchs angegebenen Merkmale gelöst.

Der Vorteil bei der Verwendung eines derartigen Anzeigefeldes in Mikroskopen anstelle der bisher üblichen Strichplatten ist einmal darin zu sehen, dass das Anzeigefeld fest in das Mikroskop eingebaut werden kann und dennoch bei geeigneter Wahl der Segmentgeometrie schnell eine Vielzahl verschiedener Symbole oder Ziffern zu schalten erlaubt, die in einzelnen Stadien der mikroskopischen Untersuchung im Zwischenbild benötigt werden.

Bei der Benutzung in Photomikroskopen bietet die Möglichkeit des Abschaltens einzelner, nur für den Beobachter nicht aber für die Filmebene bestimmter Symbole während der kurzen Zeitspanne der Filmbelichtung besondere Vorteile. Dies können z.B. Symbole sein, die dem Benutzer Informationen über den Zustand seines mikroskopischen Aufbaus geben, z.B. die nötige Belichtungszeit, Blitzbereitschaft, die Vergrösserung des gerade benutzten Objektivs, das Format der gerade benutzten Kamera etc. Informationen also, für die nach dem Stand der Technik das Kontrollieren einer Vielzahl verschiedener Instrumente nötig wäre. Diese Informationen bietet das Anzeigefeld bei geeigneter Auslegung und Verkopplung der besagten Instrumente mit der Ansteuerelektronik des Anzeigefeldes auf einen Blick dem mikroskopischen Bild überlagert.

Als Anzeigefelder können sowohl selbstleuchtende Leuchtdioden-(LED) oder Fluoreszenz-Displays als auch mit Fremdlicht arbeitende elektrochrome Displays oder mit Flüssigkristallen arbeitende Einrichtungen verwendet werden.

Letztere unter dem Namen LCD-Display bekannte Anzeigefelder sind handelsübliche Bauteile, die zurzeit für Armbanduhren, Kleinrechner etc. benutzt werden. Sie bestehen aus einer zwischen Glasplatten und Polarisationsfolien eingeschlossenen Flüssigkristallschicht, deren Transmissionsverhalten durch elektrische Felder beeinflusst wird, die mit Hilfe von auf die Glasplatten aufgebrachten Elektroden angelegt werden können. Flüssigkristall-Anzeigefelder sind zur Lösung der gestellten Aufgabe besonders geeignet, da sie auch in kleinen Stückzahlen relativ preiswert gefertigt werden können.

Ein derartiges Anzeigefeld wird zweckmässig von einer Durchlicht-Beleuchtungseinrichtung in den mikroskopischen Beleuchtungsstrahlengang vorzugsweise verkleinert einprojiziert und ist so ausgelegt, dass die benötigten Symbole bzw. Zeichen transparent mit möglichst hohem Kontrast gegenüber dem dunklen Umfeld erscheinen, um Überstrahlungen des Bildes zu vermeiden. Zur Verbesserung des Kontrastes von ca. 100 :1, den bekannte LCD-Anzeigen bereits erreichen, ist es vorteilhaft, die nicht für schaltbare Symbole benötigte Fläche des Anzeigefeldes zusätzlich durch eine opake Maske abzudecken.

Weitere vorteilhafte Ausbildungen der Erfindung finden sich in den Unteransprüchen und werden nachstehend anhand der Figuren 1-4 der beigefügten Zeichnungen erläutert :

Fig. 1 zeigt die Prinzipskizze des optischen Aufbaus eines Photomikroskopes mit einem Anzeigefeld gemäss der Erfindung ;

Fig. 2 ist eine detailliertere Darstellung des Anzeigefeldes aus Fig. 1 in Aufsicht ;

Fig. 3 zeigt einen Schnitt durch das Anzeigefeld längs der Linie III-III in Fig. 2 ;

Fig. 4 zeigt einen vergrösserten Ausschnitt des Anzeigefeldes aus Fig. 2.

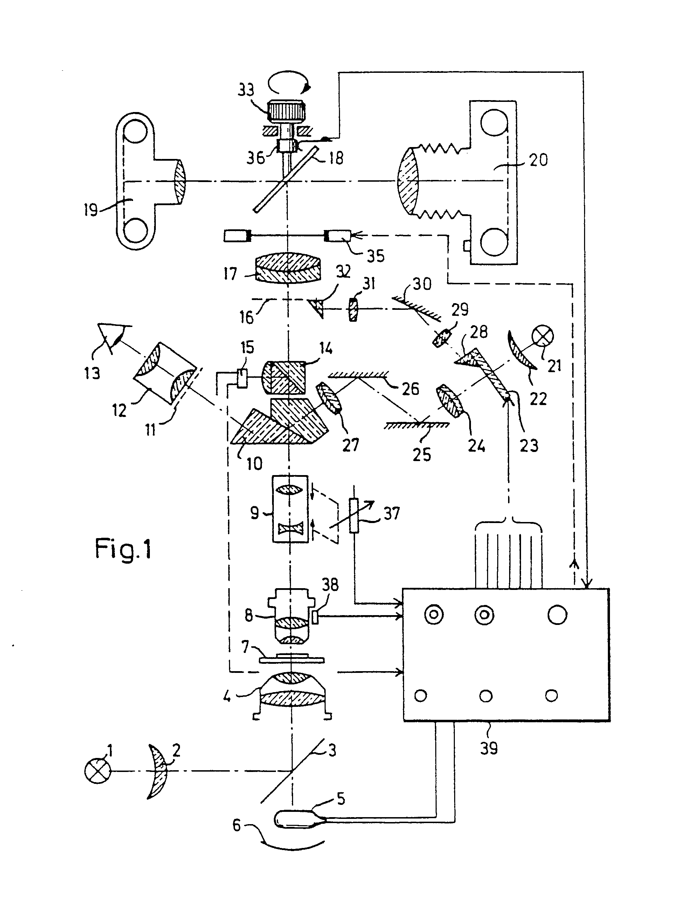

In Fig. 1 ist der Strahlengang eines Durchlicht-Photomikroskops gezeigt. Die Beleuchtungseinrichtung besteht aus einer Lichtquelle 1, einem Kollektor 2, einem teildurchlässigen Spiegel 3 und einem Kondensor 4. Unter dem teildurchlässigen Spiegel 3 befindet sich eine Blitzlampe 5 mit Reflektor 6.

Der Beobachtungsstrahlengang umfasst ein Objektiv 8, ein Zoomsystem 9 sowie ein Teilerprisma 10, das ca. 30 % des Lichts zue Erzeugung des ersten Zwischenbildes 11 in die Okulare 12 reflektiert. Von den verbliebenen ca. 70 % des Lichtes werden 10 % im Teilerwürfel 14 auf den Photoempfänger 15 reflektiert, so dass das zweite Zwischenbild 16 also von ca. 63 % des gesamten vom Objekt ausgehenden Lichtes erzeugt wird. Dieses Zwischenbild 16 wird von dem Objektiv 17 je nach Schaltstellung des drehbaren Spiegels 18 in die Filmebene entweder der Kleinbildkamera 19 oder der Grossbildkamera 20 abgebildet.

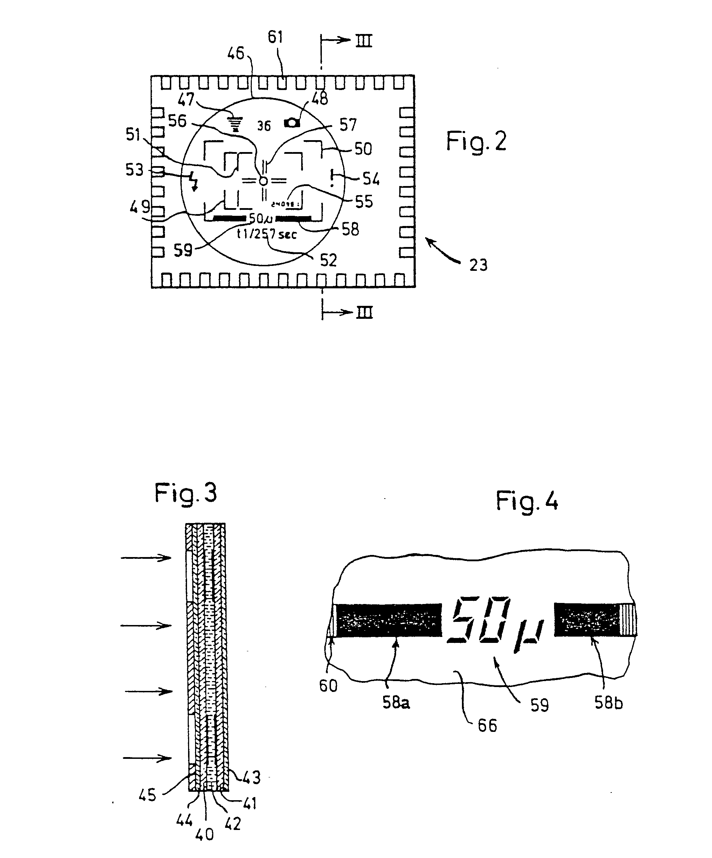

Auf das in den Zwischenbildebenen 11 bzw. 16 entstehende Bild der Objektebene 7 wird das von einer Lichtquelle 21 und dem Kondensor 22 beleuchtete Anzeigefeld 23 mit Hilfe der Abbildungsoptik 24-27 projiziert. Bei dem Anzeigefeld 23 handelt es sich um eine in den Figuren 2-5 näher dargestellte Flüssigkristallanzeige, die in bekannter Weise aus zwei innen mit Elektroden bedampften Glasplatten 40, 41 aufgebaut ist, zwischen denen eine Flüssigkristallschicht 42 in mematischer Phase eingeschlossen ist (Fig. 3). Die Glasplatten 40, 41 befinden sich ihrerseits zwischen zwei Polarisationsfolien 43 und 44. Lichteingangsseitig ist die Anordnung durch eine nur im Bereich der Elektroden transparente, im übrigen opake Maske 45 abgedeckt.

In Fig. 2 ist das Datenfeld 23 in Negativdarstellung skizziert, wobei der Einfachheit halber auch Symbole gezeigt sind, die im Normalbetrieb alternativ aufleuchten. Der Kreis 46 skizziert das in der Zwischenbildebene 11 dem Betrachter dargebotene Sehfeld. In seinem oberen Abschnitt sind zwei Symbole 47, 48 vorgesehen, zur Anzeige für die gerade in Betrieb befindliche Kamera (Grossbild/Kleinbild). Dazwischen befindet sich eine zweistellige Ziffernanzeige für die Anzahl der bereits getätigten Aufnahmem (Bildzählwerk). Den Symbolen 47/48 sind die Formatrahmen 49/50 bzw. der bei Anschluss einer Polaroidkamera gültige, kleinere Rahmen 51 zugeordnet. Darunter befindet sich eine 7-Segment Anzeige 52 für die nötige Belichtungszeit. Blitzbereitschaft wird durch das Symbol 53 angezeigt während das Symbol 54 vor Fehlbedienungen warnt.

Innerhalb der Formatrahmen 49-51 ist eine sechsstellige numerische Datumsanzeige 55 angeordnet, die allerdings, wie noch beschrieben werden wird, nicht im Zwischenbild 11 sondern nur im Zwischenbild 16 sichtbar gemacht wird. Der Kreis 56 kennzeichnet den vom Photoempfänger 15 in Fig. 1 erfassten und für die Belichtungszeitmessung herangezogenen Spot.

Damit die Messung der Belichtungszeit nicht durch das Licht der Spotanzeige, das über die Strahlteiler 10 und 14 auf den Empfänger 15 gelangen kann, verfälscht wird, ist es zweckmässig das LCD Anzeigefeld 23 im Bereich des Spots 56 durch ein Farbfilter abzudecken. Im Strahlengang vor dem Empfänger 15 kann dann ein Farbsperrfilter angeordnet werden, das den Spot 56 ausblendet.

Ausserdem ist ein jeweils aus zwei sehr dünnen, nebeneinanderliegenden Strichen gebildetes Kreuz 57 als Scharfeinstellhife vorgesehen. Schliesslich befindet sich am unteren Rand der Formatbegrenzung 49 ein Massstabsstrich 58 mit alphanumerischer Darstellung 59 der Intervallänge in der Objektebene. Das Anzeigefeld ist an seinem Rand mit Kontaktleisten versehen, mit deren Einzelkontakten 61 die Elektroden für die Ziffern bzw. Symbole verbunden sind.

Wie in Fig. 1 dargestellt werden die einzelnen Segmente des Anzeigefeldes 23 von einer Elektronikeinheit 39 angesteuert, über die auch der Verschluss 35 im Strahlengang zu den beiden Kameras 19 bzw. 20 betätigt wird. Die Anwahl der gewünschten Kamera erfolgt durch Drehen des Spiegels 18 mit Hilfe des Knopfes 33, der gleichzeitig einen mit der Ansteuerelektronik gekoppelten Wahlschalter 36 betätigt. Vom Schalter 36 wird dann die Darstellung der Symbole 47-51 mit Hilfe einer geeigneten Schaltung in der Einheit 39 abgeleitet.

Die Einheit 39 enthält weiterhin eine Uhr für die Datumsanzeige 55 und eine Belichtungsautomatik herkömmlicher Bauart zur Ermittlung des Anzeigewertes 52 aus dem Signal der Photodiode15. Die Einheit 39 ist ausserdem mit einem Wegmesssystem 37 verbunden, das die Stellung der verschieblichen Linsenelemente des Zoomsystems 9 meldet, sowie an einen Codeleser 38 angeschlossen, der die Massstabszahl des gerade verwendeten Objektivs 8 liefert. Aus beiden Informationen wird in der Einheit 39 der Abbildungsmassstab des in Fig. 1 dargestellten optischen Systems berechnet und dann zur Darstellung des Massstabs 58/59 auf dem Anzeigefeld 23 weiterverarbeitet.

In der in Fig. 4 gezeigten Ausführungsform wird der Strichmassstab 58 von einer Vielzahl aneinandergereihter, einzeln ansteuerbarer Segmente 60 gebildet. Jeweils mehrere Einzelsegmente bilden aneinandergereiht einen Balken 58, dessen Länge also auf eine Segmentbreite genau eingestellt werden kann. Der Balken 58 wird durch eine alphanumerische Anzeige 59 unterbrochen, die die Länge des Balkens 58 dividiert durch den Abbildungsmassstab des optischen Systems zwischen Objektebene 7 und Zwischenbildebene 11 angibt.

Mit dieser Anordnung ist bei geeigneter Ansteuerung eine quasi analoge Spreizung und Stauchung des Balkens 58 möglich, so dass die alphanumerische Anzeige 59 fest verdrahtet werden kann.

Die in Fig. 2 mit 55 bezeichnete Datumsanzeige wird nicht wie die übrigen Symbole und Zeichen dem Zwischenbild 11 überlagert sondern wird mit einer Optik 28-32 als Ausschnitt direkt in das Zwischenbild 16 abgebildet (Fig. 1). Der zur Einspiegelung verwendete Prismenspiegel 32 schaftet dabei das mikroskopische Bild ab, so dass die Datumsanzeige also in der Filmebene der beiden Kameras 19 bzw. 20 stets eindeutig, d.h. unbeeinflusst von darüber liegenden Bildstrukturen optimal hell auf schwarzem Grund erscheint. Dies wäre bei Einspiegelung über die Strahlteiler 10 und 14 nicht der Fall, die nur ca. 27 % des vom Anzeigefeld 23 ausgehenden Lichtes in den photographischen Strahlengang reflektieren.

In der hier gezeigten Ausführungsform dient das Anzeigefeld 23 sowohl zur Einbelichtung von Zusatzzeichen in die Filmebene als auch zur komprimierten Darstellung von Informationen für den Benutzer des Mikroskops. In manchen Fällen, beispielsweise wenn eine noch grössere Anzahl zusätzlicher Symbole und Zeichen dargestellt werden soll, kann es zweckmässig sein, für die Einbelichtung in den Photostrahlengang und in die Okulare zwei räumlich getrennte Anzeigefelder zu verwenden. Diese hier nicht dargestellte Anordnung bietet den Vorteil, dass auch geringes Restlicht von der Filmebene ferngehalten werden kann, welches trotz Dunkelsteuerung der nur für den Beobachter gedachten Symbole (z.B. 56 und 57) im Moment der Belichtung aufgrund des evtl. nicht für ausreichend gehaltenen Kontrastabstandes des LCD-Anzeigefeldes über das Teilerprisma 10 in den Photostrahlengang eingespiegelt werden könnte. Denn bei Verwendung zweier getrennt beleuchteter Anzeigefelder kann die Beleuchtung des für die Okulareinspiegelung verwendeten Anzeigefeldes während der Filmbelichtung abgeschaltet werden.

**Patentansprüche**

1. Photomikroskop mit einer Einrichtung zur Überlagerung des Bildes im Okulartubus mit Zusatzinformationen, die ein elektrisch ansteuerbare Segmente enthaltendes Anzeigefeld (23) aufweist, das in die Zwischenbildebene (11) im Okulartubus abgebildet wird, dadurch gekennzeichnet, daß Reflektoren (28, 32) vorgesehen sind, die einen getrennt schaltbaren Teilbereich des Anzeigefeldes (23), und zwar nur diesen Teilbereich als Ausschnittprojektion order ein zweites, getrennt beleuchtbares Anzeigefeld, und zwar nur dieses zweite Anzeigefeld, direkt in die Zwischenbildebene (16) des vom Okularstrahlengang abgespaltenen, nur noch zum photographischen Film führenden Strahlengangs einblenden.

2. Photomikroskop nach Anspruch 1, dadurch gekennzeichnet, dass ein Flüssigkristall-Anzeigefeld (LCD-Display 23) verwendet ist, das transparente Zeichen bzw. Symbole (47-59) darstellt und von einer Durchlichtprojektionseinrichtung (21, 22) beleuchtet wird.

3. Photomikroskop nach Anspruch 2, dadurch gekennzeichnet, dass die nicht von Zeichen bzw. Symbolen beanspruchte Fläche des Anzeigefeldes (23) durch eine opake Maske (45) abgedeckt ist.

4. Photomikroskop nach Anspruch 1-3, dadurch gekennzeichnet, dass das Anzeigefeld (23) in gleicher Grösse oder verkleinert in die Zwischenbildebene abgebildet wird.

5. Photomikroskop nach Anspruch 1, dadurch gekennzeichnet, dass die Reflektoren (32) unmittelbar vor einer weiteren Zwischenbildebene (16) im Phototubus angeordnet sind und den mikroskopischen Strahlengang im Bereich der Ausschnittprojektion abschatten.

6. Photomikroskop nach Anspruch 1, dadurch gekennzeichnet, dass das Anzeigefeld zur Darstellung eines Massstabsstrichs variabler Länge eine Vielzahl aneinandergereihter, separat ansteuerbarer Segmente enthält.

7. Photomikroskop nach Anspruch 1-6, dadurch gekennzeichnet, dass die Ansteuerelektronik (39) für das Anzeigefeld (23) mit Signalgebern (36-38) verbunden ist, die mit Einstellmitteln am Mikroskoptubus gekoppelt sind.

8. Photomikroskop nach Anspruch 6-7, dadurch gekennzeichnet, dass die Darstellung des Massstabsstrichs (58) von Einstellmitteln für den Abbildungsmassstab des Mikroskops gesteuert wird.

## Claims

1. A photomicroscope with a device for superposing additional informations on the image in the eyepiece tube, that device comprising a display field with electrically controllable segments, the display field (23) being imaged into the intermediate image plane (11) in the eyepiece tube, characterized by the fact that reflectors (28, 32) are provided for imaging by selective localized projection a separately controllable part of the display field (23) and only this part, or imaging a second, separately illuminated display field and only this second display field, into the film plane in a ray path divided from the eyepiece ray path and leading to the photographic film only.

2. A photomicroscope according to claim 1, characterized by the fact that a liquid-crystal display field (LCD display 23) is used which presents transparent signs or symbols (47-59) and is illuminated by a transmitted-light projector (21, 22).

3. A photomicroscope according to claim 2, characterized by the fact that the area of the display field (23) which is not taken up by signs or symbols is covered by an opaque mask (45).

4. A photomicroscope according to claims 1-3, characterized by the fact that the display field (23) is projected in true or reduced size into the intermediate image plane.

5. A photomicroscope according to claim 1, characterized by the fact that the reflectors (32) are arranged directly in front of a second intermediate image plane (16) in the camera tube and are locally masking the microscope beam in the region of the selective localized projection of a portion of the display field.

6. A photomicroscope according to claim 1, characterized by the fact that the display field comprises a plurality of separately controllable segments arranged side by side for presenting a scale line of variable length.

7. A photomicroscope according to claim 1-6, characterized by the fact that the display control electronics (39) for the display field (23) is connected with signal transmitters (36-38) which are coupled with setting means on the microscope tube.

8. A photomicroscope according to claims 6-7, characterized by the fact that the display of the scale line (58) is controlled by means for setting the magnification of the microscope.

## Revendications

1. Microscope photographique comprenant un dispositif qui permet de superposer sur l'image observée dans le tube oculaire des informations supplémentaires visualisées dans un champ d'affichage dont les segments peuvent être commandés par voie électrique et qui est reproduit au niveau du plan d'image intermédiaire (11) dans le tube oculaire, caractérisé en ce que des réflecteurs (28, 32) sont prévus qui projettent une certaine partie de ce champ d'affichage (23), commutable séparément, et rien que cette partie sous forme d'une projection partielle, ou bien un deuxième champ d'affichage, éclairé séparément, et uniquement ce deuxième champ, projection qui est dirigée directement vers le plan d'image intermédiaire (16) d'un trajet lumineux dévié du trajet lumineux de l'oculaire et conduisant seulement à la pellicule photographique.

2. Microscope photographique selon revendication 1, caractérisé en ce qu'il comprend un champ d'affichage à cristaux liquides (LCD-Display 23) qui représente des signes et symboles transparents (47-59) et qui est éclairé par un dispositif de projection diascopique (21, 22).

3. Microscope photographique selon revendication 2, caractérisé en ce que la partie du champ d'affichage (23) qui n'est pas utilisée pour la représentation des signes et symboles est recouverte par un masque opaque (45).

4. Microscope photographique selon revendications 1-3, caractérisé en ce que le champ d'affichage (23) est reproduit dans le plan d'image intermédiaire en grandeur naturelle ou bien plus petite.

5. Microscope photographique selon revendication 1, caractérisé en ce que les réflecteurs (32) se trouvent directement devant un autre plan d'image intermédiaire (16) dans le tube photographique et obscurcissent le faisceau lumineux au niveau de la zone recouverte par la projection partielle.

6. Microscope photographique selon revendication 1, caractérisé en ce que le champ d'affichage contient une série de segments disposés de façon linéaire et commandés individuellement pour représenter des traits d'échelles de longueurs variables.

7. Microscope photographique selon revendications 1-6, caractérisé en ce que l'électronique de commande (39) du champ d'affichage (23) est reliée à des émetteurs de signaux (36-38) raccordés à des dispositifs de réglage sur le tube du microscope.

8. Microscope photographique selon revendications 6-7, caractérisé en ce que l'affichage du trait d'échelle (58) est commandé par les dispositifs destinés à régler l'échelle de reproduction du microscope.

Fig.1

## Fig. 2

36

50μ
t1/257 sec

47
61
46
48
56
57
51
50
53
54
49
55
59
58
52
23

## Fig. 3

45
44
40
42
41
43

## Fig. 4

50μ

60
58a
66
59
58b